# EUROPEAN PATENT SPECIFICATION

(11) **EP 3 705 271 B1**
(45) Date of publication and mention of the grant of the patent: **06.04.2022**
(21) Application number: 18885792.4
(22) Date of filing: 24.10.2018
(51) Int. Cl.: B29C 65/02, B29C 65/06, B29C 65/36, B29C 65/48, B29C 65/50, B29C 65/56, B32B 5/28, B29C 70/86, B29C 70/88

(54) **METHOD FOR BONDING COMPOSITE MATERIAL**
VERFAHREN ZUM VERKLEBEN EINES VERBUNDWERKSTOFFES
PROCÉDÉ POUR LE COLLAGE D'UN MATÉRIAU COMPOSITE

(30) Priority: 07.12.2017 JP 2017235329
(43) Date of publication of application: 09.09.2020
(73) Proprietor: Mitsubishi Heavy Industries, Ltd., Chiyoda-ku Tokyo 100-8332 (JP)
(72) Inventor: KAMO, Sota, Tokyo 108-8215 (JP); TAKAGI, Kiyoka, Tokyo 108-8215 (JP); TAKAYANAGI, Toshiyuki, Tokyo 108-8215 (JP)
(74) Representative: Henkel & Partner mbB
(86) International application number: PCT/JP2018/039477
(87) International publication number: WO 2019/111571

(56) References cited:
- WO-A1-2017/005721
- WO-A1-2017/005721
- DE-A1-102015 112 874
- JP-A- H03 297 629
- JP-A- 2007 307 778
- JP-A- 2016 215 499
- JP-A- 2016 215 499
- JP-A- 2017 035 871

## Description

### Technical Field

The present invention relates to a method for bonding composite materials.

### Background Art

Composite materials including resins and reinforcing fibers are lighter than metal materials and further, have high specific strength and specific rigidity, hence, the composite materials are used in a variety of applications, for instance, as components for aircrafts. Normally, when forming a component using such a composite material, the component is formed by laminating sheet-like prepregs having reinforcing fibers impregnated with a resin. In the composite material formed in this manner, a strength along a lamination direction may be less than a strength along an extension direction of the reinforcing fibers. Patent Document 1 describes a configuration in which delamination between layers is suppressed by increasing strength along a lamination direction, which is achieved by formation including insertion of pins through the plurality of prepreg layers.

### Citation List

### Patent Document

Patent Document 1: JP 2010-522655 T
Patent Document 2: DE 10 2015 112874 A1
Patent Document 3: WO 2017/005721 A1
Patent Document 4: JP 2016 215499 A
Patent Document 2 relates to methods of repairing thermoplastic and polymeric composite parts using adhesion promoters, such as interface structures of metal or carbon material.
Patent Document 3 discloses that a profile body of a not liquefiable material is used as a connecting element between a first object and a second object, wherein the profile body may especially be metallic and/or may be bendable. The profile body, in contrast to a conventional wire, however, has a shape defining a first and a second undercut.
Patent Document 4 discloses a fiber-reinforced resin molded body comprising: a plurality of fiber reinforcing sheets fixing reinforcing fiber with a resin; and a fixture having a projection, in a state where a plurality of fiber reinforcing sheets are mutually laminated, via a boundary face between the confronted fiber reinforcing sheets, projecting to a direction crossed to the joining boundary.

### Summary of Invention

### Technical Problem

However, this type of pin may fall out from the composite material layers and there is room for improvement in technology to suppress delamination.

The present invention solves the problem described above and an object of the present invention is to provide a method for bonding a composite material that suppress delamination.

### Solution to Problem

In order to solve the problem described above and to achieve the object, there is provided a method as set out in independent claim 1. Advantageous developments are defined in the dependent claims. A method for bonding composite materials according to the present disclosure is for bonding a first composite material that contains reinforcing fibers and is impregnated with a resin and a second composite material that contains reinforcing fibers and that is impregnated with a resin, and includes a protruding member placement step for placing, on a surface of the first composite material, a plurality of protruding members each including a plurality of protrusions protruding in mutually different directions, a second composite material placement step for placing the second composite material at a location, where the protruding members are placed on the surface of the first composite material, an introduction step for introducing the protruding members into the interior of the first composite material and the interior of the second composite material to bring the first composite material and the second composite material into contact with each other, and a bonding step for curing the resin with which the first composite material and the second composite material are each impregnated in a state where the protruding members are introduced in the interiors to bond the first composite material and the second composite material.

Since the first composite material and the second composite material are bonded together in a state where the protruding members are introduced therein, this bonding method can suppress delamination.

Preferably, the resin with which the first composite material and the second composite material are impregnated is a thermoplastic resin, the introduction step includes heating and melting the resin with which the first composite material and the second composite material are each impregnated to introduce the protruding members into the interiors of the first composite material and the second composite material, and the bonding step includes cooling the resin with which the first composite material and the second composite material are each impregnated to cure the resin. This bonding method can favorably suppress delamination in the composite material in which the thermoplastic resin is used.

Preferably, in the protruding member placement step, a protruding member layer, in which a plurality of the protruding members are included in a resin, is formed on a surface of the first composite material. This bonding method can cause the protruding member to be favorably introduced into the interior of the first composite material and the interior of the second composite material.

Preferably, the protruding member is formed of a composite material having reinforcing fibers impregnated with a resin. This bonding method can favorably suppress delamination while enhancing adhesion of the protruding member to the first composite material and the second composite material.

According to the invention, the protruding member is formed by heating, under a predetermined pressure, a raw material including a plurality of reinforcing fibers of a predetermined length and a resin, then cooling the raw material to form a porous intermediate material, and crushing the intermediate material. With this bonding method, the protruding member having high adhesion to the first composite material and the second composite material can be easily manufactured.

In order to solve the problem described above and achieve the object, a composite material according to the present disclosure includes a first composite material layer having reinforcing fibers impregnated with a resin, a second composite material layer coupled to the first composite material layer, and having reinforcing fibers impregnated with a resin, and a plurality of protruding members provided from an interior of the first composite material layer to an interior of the second composite material layer, and provided with a plurality of protrusions protruding in mutually different directions. Since the first composite material and the second composite material are bonded together in a state where the protruding members are introduced therein, this composite material can suppress delamination.

### Advantageous Effects of Invention

According to the present invention, delamination can be suppressed.

### Brief Description of Drawings

FIG. 1 is a schematic cross-sectional view illustrating a configuration of a composite material according to a present embodiment.
FIG. 2 is a schematic cross-sectional view of a first composite material and a second composite material.
FIG. 3 is a schematic perspective view of a protruding member according to the present embodiment.
FIG. 4 is a diagram describing a method for manufacturing the protruding member according to the present embodiment.
FIG. 5 is an explanatory diagram describing a method for bonding the first composite material and the second composite material.
FIG. 6 is a diagram illustrating another example of a bonded state of the first composite material and the second composite material.
FIG. 7 is a diagram illustrating another example of the method for bonding the first composite material and the second composite material.

### Description of Embodiments

Preferred embodiments of the present invention will be described in detail below with reference to the accompanying drawings. Note that the present invention is not limited to these embodiments, and, when there are a plurality of embodiments, the present invention is intended to include a configuration combining these embodiments.

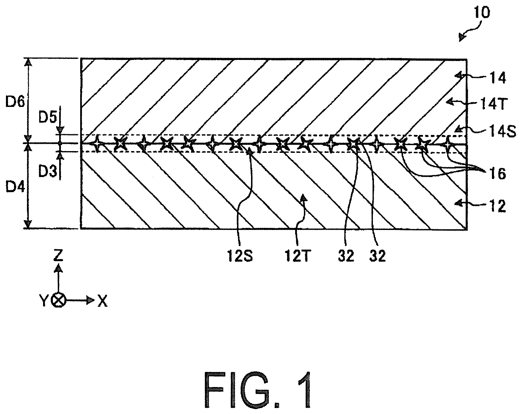

FIG. 1 is a schematic cross-sectional view illustrating a configuration of a composite material according to a present embodiment. A composite material 10 according to the present embodiment is a member used in products such as aircraft but the application is not limited thereto. Further, hereinbelow, a direction X, a direction Y orthogonal to the direction X, and a direction Z orthogonal to the direction X and the direction Y are defined.

As illustrated in FIG. 1, the composite material 10 according to the present embodiment includes a first composite material 12 as a first composite material layer, a second composite material 14 as a second composite material layer, and a protruding member 16. The composite material 10 illustrated in FIG. 1 illustrates a state after molding, that is, a state after bonding the first composite material 12 and the second composite material 14. The composite material 10 is formed by laminating, and more specifically bonding, the first composite material 12 and the second composite material 14. Further, a plurality of the protruding members 16 are provided in a region in which the first composite material 12 and the second composite material 14 are bonded. That is, the protruding members 16 are provided from an interior of the first composite material 12 to an interior of the second composite 14, and are not exposed to an exterior of the composite 10.

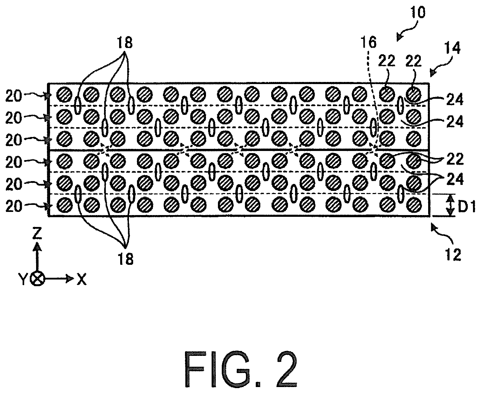

FIG. 2 is a schematic cross-sectional view of the first composite material and the second composite material. As illustrated in FIG. 2, the first composite material 12 is a composite material including reinforcing fibers 22 and a resin 24, and, in other words, is a composite material having the reinforcing fibers 22 impregnated with the resin 24. The reinforcing fibers 22 are fibers having a higher strength than the resin 24. The reinforcing fibers 22 are carbon fibers (Carbon Fibers) that are a carbon material. However, the reinforcing fibers 22 are not limited to carbon fibers, and may be other fibers, e.g., plastic fibers, glass fibers, or metal fibers.

The resin 24 is a thermoplastic resin that melts when heated to a predetermined temperature. Examples of thermoplastic resins that can be used as the resin 24 include polyether ether ketone (PEEK), polyether ketone ketone (PEKK), polyphenylene sulfide (PPS), and the like. Specifically, in the present embodiment, carbon fiber reinforced thermo plastic (CFRTP) is used as the first composite material 12. However, the resin 24 is not limited to the thermoplastic resin, and may be, for example, a thermosetting resin. An epoxy resin may be used as the thermosetting resin, for example.

As illustrated in FIG. 2, the first composite material 12 is configured by laminating a plurality of composite material layers 20 along the direction Z. The composite material layer 20 is a layer in which a plurality of reinforcing fibers 22 are aligned in the layer of the resin 24 that is a base material. However, because the composite material layers 20 are bonded together, it can be said that there are no boundaries between the composite material layers 20. Therefore, the composite material layers 20 can be said to be layers including the reinforcing fibers 22 and the resin 24 that covers the reinforcing fibers 22. A thickness D1 of the composite material layer 20 along the direction Z is from 0.01 mm to 1 mm but is not limited thereto.

In the present embodiment, in the first composite material 12, the reinforcing fibers 22 are aligned in the direction X in each of the composite material layers 20. In addition, as illustrated in FIG. 2, in the first composite material 12, the plurality of reinforcing fibers 22 are aligned extending in the direction Y in the resin 24, which is the base material. Specifically, the first composite material 12 is a unidirectional material, in other words, a UD material. However, as long as the plurality of reinforcing fibers 22 are aligned extending in any one given direction, the reinforcing fibers 22 are not limited to extending in the direction Y. Further, in the present embodiment, the reinforcing fibers 22 are aligned extending in the same direction but the alignment extending direction of the reinforcing fibers 22 may be different for each of the composite material layers 20. Further, in the first composite material 12, the alignment extending direction of the reinforcing fibers 22 need not necessarily be one direction only, and alignment extending directions of the reinforcing fibers 22 may be oriented in a plurality of directions. Further, in the first composite material 12, the reinforcing fibers 22 aligned extending in mutually different directions (for example, the X direction and the Y direction) may be woven into one another in the composite material layers 20. In other words, the composite material layers 20 may be cross members.

The second composite material 14 is a laminate body in which the composite material layers 20 are laminated in the direction Z, and is a composite material having the reinforcing fibers 22 impregnated with the resin 24. Specifically, the second composite material 14 has the same structure as the first composite material 12. However, as long as the second composite material 14 is the composite material having the reinforcing fibers 22 impregnated with the resin 24, the second composite material 14 may have a different structure from the first composite material 12, as represented by the alignment extending direction of the reinforcing fibers 22 being different from that of the first composite material 12.

The first composite material 12 and the second composite material 14 are bonded to each other. Since the first composite material 12 and the second composite material 14 are bonded by both the resin 24 in the first composite material 12 and the resin 24 in the second composite material 14, which are mixed together, there is no boundary between the first composite material 12 and the second composite material 14.

Note that, as illustrated in FIG. 2, the first composite material 12 may be provided with pins 18 between the composite material layers 20. The pins 18 are provided in alignment extending in the direction Z from the resin 24 of one of the laminated composite material layers 20, to the resin 24 of another one of the laminated composite material layers 20. The pin 18 is a member formed by providing a resin layer of the same material as that of the resin 24 around fibers of the same material as that of the reinforcing fibers 22. The pins 18 are disposed so as to penetrate through the composite material layers 20 when the composite material layers 20 are laminated together. During thermoforming, which will be described below, the resin layer of the pin 18 melts, hence, the fibers remain. Because these fibers are provided across the composite material layers 20, an interlayer strength between the composite material layers 20 can be enhanced. Further, the resin of the pins 18 may be a thermosetting resin. In this case, since the entirety of each of the pins 18 is cured during thermoforming, the interlayer strength between the composite material layers 20 can be enhanced. Further, each of the pins 18 is more preferably coated with an adhesive on a surface thereof. As a result, adhesion to the composite material layers 20 is enhanced. However, the material of the pins 18 is not limited to this example, and may be any material. Further, the pins 18 may also be provided between the second composite materials 14.

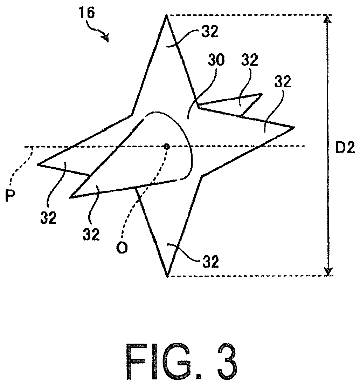

Next, the protruding member 16 will be described. FIG. 3 is a schematic perspective view of the protruding member according to the present embodiment. As illustrated in FIG. 3, the protruding member 16 is a member having a plurality of protrusions 32. The protrusions 32 protrude in different directions. In other words, the protruding member 16 can be said to be a protruding member in which the protrusions 32 do not all extend in the same direction, and has the protrusions 32 extending in directions mutually different from the other protrusions 32. More specifically, in the protruding member 16, the plurality of protrusions 32 extend radially in mutually different directions, from an outer peripheral surface of a base material portion 30. Here, a plane passing through a center O of the protruding member 16 is denoted as a plane P. In this case, the protruding member 16 includes, at least, the protrusion 32 that extends to one side in a direction perpendicular to the plane P, and the protrusion 32 that extends to another side in the direction perpendicular to the plane P. In this way, the protrusion 32 of the protruding member 16 extending to the one side can be inserted into the first composite material 12 and the protrusion 32 of the protruding member 16 extending to the other side can be inserted into the second composite material 14.

Further, three or more of the protrusions 32 are preferably provided on the protruding member 16. Note that the protruding member 16 may have two of the protrusions 32 but in this case, the protruding directions of the protrusions 32 are not aligned in a straight line, and the protruding directions of the protrusions 32 form an inclined hook shape therebetween. In the example illustrated in FIG. 3, the protrusions 32 each has a tip of a pointed cone shape but the shape is not limited thereto. Further, the protruding member 16 need not necessarily be provided with the base material portion 30, as long as the protruding member 16 includes the plurality of protrusions 32. In other words, the shape of the protruding member 16 is not limited to a shape in which the protrusions 32 protrude from the base material portion 30. The protruding member 16 may be formed by combining the plurality of protrusions 32 that are, for example, needle-shaped and extend in predetermined directions, without including the base material portion 30. Further, the protruding member 16 may have a shape in which the protrusions 32 have other protrusions 32 protruding therefrom.

Further, a particle size D2 of the protruding member 16 is preferably from 0.01 mm to 2 mm. In addition, the particle size D2 of the protrusion 32 is preferably from 0.1 to 2 times the thickness D1 of the composite material layer 20. However, the particle size D2 of the protruding member 16 is not limited to the length described above, and may be any length. Note that the particle size D2 of the protruding member 16 is the longest outer diameter out of outer diameters of the protruding member 16. For example, the particle size D2 is the longest distance among distances from the tip of one of the protrusions 32 to the tip of another of the protrusions 32 through the center of the protruding member 16. The particle size D2 may be, for example, a particle size determined based on a particle size distribution, which is determined by a laser diffraction/scattering method. In this case, for example, the particle size D2 may be an average value of particle sizes (equivalent circle diameter) of all of the protruding members 16 determined by the laser diffraction/scattering method. However, the determination of the particle size D2 is not limited to this, and the particle size D2 may be obtained by other methods.

As illustrated in FIG. 1, the protruding member 16 having such a shape is provided from the interior of the first composite material 12 to the interior of the second composite material 14. More specifically, while some of the protrusions 32 of the protruding member 16 are introduced into the first composite material 12, the other protrusions 32 of the protruding member 16 are introduced into the second composite material 14 Accordingly, it can be said that the protruding member 16 is configured to couple (physically fasten) the first composite material 12 and the second composite material 14 to each other. Further, the plurality of protruding members 16 are provided in a dispersed manner along the direction X and the direction Y. More specifically, the plurality of protruding members 16 are preferably provided uniformly in the surfaces of the first composite material 12 and the second composite material 14. Note that it is sufficient that at least some of the protruding members 16 be provided from the interior of the first composite material 12 to the interior of the second composite 14, and not all of the protruding members 16 need necessarily be provided from the interior of the first composite material 12 to the interior of the second composite 14. Further, in the example illustrated in FIG. 1, the plurality of protruding members 16 are not provided along the direction Z but the plurality of protruding members 16 may be provided along the direction Z.

Further, as shown in FIG. 1, the protruding members 16 are positioned in a region near a bonding surface between the first composite material 12 and the second composite material 14, and are not positioned in regions deep inside the first composite material 12 and the second composite 14. Specifically, a location on the surface of the first composite material 12 on the side of bonding with the second composite material 14 is denoted as a region 12S, and a location on the opposite side of the region 12S from the second composite material 14 is denoted as a region 12T. In this case, the protruding members 16 are positioned in the region 12S but are not positioned in the region 12T. Here, the thickness of the region 12S along the direction Z is denoted as a thickness D3, and the thickness of the first composite material 12 along the direction Z is denoted as a thickness D4. In this case, the thickness D3 is preferably from 0.001 to 1 times the thickness D4.

Further, a location on the surface of the second composite material 14 on the side of bonding with the first composite material 12 is denoted as a region 14S, and a location on the opposite side of the region 14S from the first composite material 12 is denoted as a region 14T. In this case, the protruding members 16 are positioned in the region 14S, and more specifically, from the region 12S to the region 14S but are not positioned in the region 14T. Here, the thickness of the region 14S along the direction Z is denoted as a thickness D5, and the thickness of the second composite material 14 along the direction Z is denoted as a thickness D6. In this case, the thickness D5 is preferably from 0.001 to 1 times the thickness D6.

The protruding member 16 is formed of a composite material having reinforcing fibers 44 impregnated with a resin 42a. The reinforcing fibers 44 of the protruding member 16 are the same carbon fibers as the reinforcing fibers 22 of the first composite 12 but may also be formed of other materials, such as plastic fibers, glass fibers, or metal fibers. Further, the resin 42a of the protruding member 16 is also a thermoplastic resin of the same material as that of the resin 24 of the first composite 12 but may have a different material from that of the resin 24 or may be a thermosetting resin. The protruding member 16 is a member in which the reinforcing fibers 44 are provided and the reinforcing fibers 44 are covered by the resin 42a. However, the protruding member 16 is not limited to being the composite material having the reinforcing fibers 44 impregnated with the resin 42a. For example, the protruding member 16 may be configured of a material having higher temperature characteristics than the resin 24, and a high affinity with the resin 24. The high temperature characteristics include, for example, a higher fusing point than that of the resin 24, and the like. Further, the material having the high affinity with the resin 24 refers to a material that easily bonds with the resin 24. Examples of this type of material of the protruding member 16 include a polybenzimidazole (trade name Poly Benz Imnidazol; PBI) resin, and a polyether ketone ether ketone ketone (PEKEKK)resin.

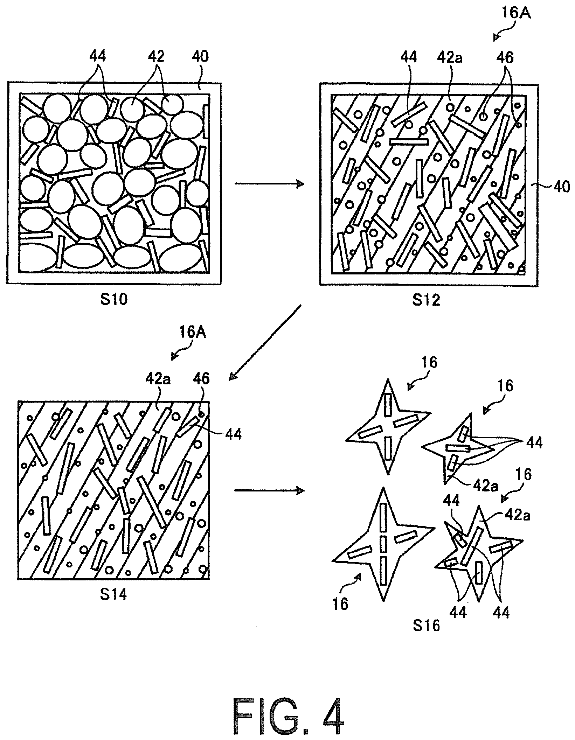

Next, a description will be given of a method for manufacturing the protruding members 16. FIG. 4 is a diagram illustrating a method for manufacturing the protruding member according to the present embodiment. As illustrated in FIG. 4, when manufacturing the protruding member 16, first, a resin 42 and the reinforcing fibers 44 are fed into a container 40 as raw materials (step S10). The resin 42 is a thermoplastic resin of the same material as that of the resin 24, and is in a cured state. In the present embodiment, a plurality of pieces of the resin 42, for example, are fed into the container 40. Further, a plurality of the reinforcing fibers 44 of a predetermined length are fed into the container 40. That is, the reinforcing fibers 44 are fed into the container 40 as chopped fibers. Once the small pieces of resin 42 and the chopped reinforcing fibers 44 are fed into the container 40, the resin 42 and reinforcing fibers 44 in the container 40 are stirred so that the reinforcing fibers 44 are uniformly dispersed in the container 40. As a result, the reinforcing fibers 44 are oriented in various directions.

After that, in a state in which the container 40 is filled with the resin 42 and reinforcing fibers 44, the resin 42 in the container 40 is heated thereby melting the resin 42 (step S12). In this case, for example, the container 40 as a whole is heated from the outside of the container 40, and the resin 42 is heated to a temperature higher than or equal to the melting point of the resin 42. Further, when implementing heating, a pressure inside the container 40 is maintained at a predetermined pressure. The predetermined pressure in this case is, for example, from -1 MPa to 5 MPa, that is, the pressure is held at a relatively low pressure. As a result of the heating, the resin 42 melts, and the melted resin 42 fills the gaps between the pieces of resin 42 and the gaps between the pieces of resin 42 and the reinforcing fibers 44. Further, the reinforcing fibers 44 are impregnated with the melted resin 42.

After the resin 42 has been melted in this manner, the heating is stopped and the resin 42 is cooled to the melting point or lower, to produce an intermediate material 16A. During this cooling also, the pressure in the container 40 is maintained at the predetermined pressure. By cooling the melted resin 42, the resin 42 is cured to form the resin 42a. In addition, because the pressure is maintained at the low pressure, a plurality of empty holes 46 are created inside the resin 42a that is produced by the cooling. Specifically, the intermediate material 16A produced by the cooling of the resin 42 is a member that includes the resin 42a, the reinforcing fibers 44, and the empty holes 46. More specifically, the intermediate material 16A is a porous composite in which the plurality of reinforcing fibers 44 extending in mutually different directions are dispersed within a layer of the cured resin 42a, and in which the plurality of empty holes 46 are provided within the layer of resin 42a.

After the intermediate material 16A is produced, the intermediate material 16A is removed from the container 40 (step S14). The removed intermediate material 16A is then broken into pieces to produce the plurality of protruding members 16 (step S16). Receiving an impact from outside, the intermediate material 16A is broken into pieces at the empty holes 46. The pieces of the broken intermediate material 16A respectively become the protruding members 16. Because the intermediate material 16A is porous, each of the protruding members 16, which are the pieces formed by the breaking, is shaped to have the plurality of protrusions 32. Then, in the protruding member 16, each of the protrusions 32 is formed by the reinforcing fibers 44 covered with the resin 42a. The protruding members 16 may differ in shape from each other as long as the protruding member 16 is the member having the plurality of protrusions 32. Note that, in the protrusion 32, at least some of the reinforcing fibers 44 may be exposed, without being covered by the resin 42a.

The protruding member 16 is manufactured as described above. However, the method for manufacturing the protruding member 16 is not limited to this, and may be any method other than this.

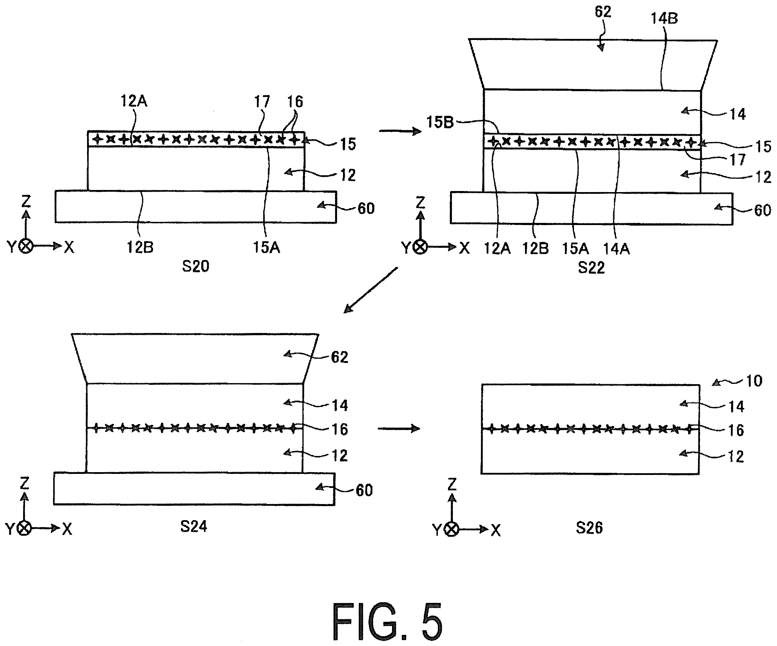

Next, a method for bonding the first composite material 12 and the second composite material 14 will be described. FIG. 5 is an explanatory diagram illustrating a method for bonding the first composite material and the second composite material. As illustrated in FIG. 5, when the first composite material 12 and the second composite material 14 are bonded, first, the first composite material 12 and second composite material 14 prior to molding, and the protruding members 16 are prepared. In the present embodiment, because the resin 24 is the thermoplastic resin, the first composite material 12 and second composite material 14 prior to molding are in a cured state. On the other hand, when the thermosetting resin is used as the resin 24, the first composite material 12 and second composite material 14 that are prepared prior to molding are in a prepreg state prior to curing of the resin 24.

Then, the first composite material 12 is placed on a base portion 60, and the protruding members 16 are placed on a surface 12A of the first composite material 12 (step S20; a protruding member placement step). More specifically, a back surface 12B of the first composite material 12 is brought into contact with the base portion 60, hence, the first composite material 12 is placed on the base portion 60. Note that the surface 12A is a surface on one side of the first composite material 12 along the direction Z, and the back surface 12B is a surface on the other side of the first composite material 12 along the direction Z.

Then, a protruding member layer 15 is formed on the surface 12A of the first composite material 12 on the base portion 60. The protruding member layer 15 is a layer having the plurality of protruding members 16 provided inside a resin layer 17. The resin layer 17 is a layer of resin and is, for example, the same material as that of the resin 24 of the first composite material 12. The protruding member layer 15 has therein the protruding members 16 dispersed in the resin layer 17. Therefore, by forming the protruding member layer 15 on the surface 12A of the first composite material 12, the plurality of protruding members 16 are placed on the surface 12A of the first composite material 12. Note that the protruding member layer 15 is in a cured state but may be a paste-like layer in which a pre-cured thermosetting resin is used as the resin layer 17, for example. The thickness of the protruding member layer 15 in the direction Z is thinner than the thickness of the first composite material 12 in the direction Z.

In the protruding member layer 15, the protruding members 16 are preferably placed such that the protrusions 32 protrude in the direction Z. For example, in a state in which the resin layer 17 of the projection member layer 15 is melted, the protrusions 32 of the protruding members 16 can be caused to be arranged along the direction Z by applying an electric current to the protruding member layer 15 along the direction X. Note that, in step S20, the protruding member layer 15 need not necessarily be formed, and, for example, the plurality of protruding members 16 may be placed on the surface 12A of the first composite material 12 on the base 60.

Thereafter, the second composite material 14 is placed at a location, where the protruding members 16 of the surface 12A of the first composite material 12 are placed (step S22; a second composite material placement step). More specifically, the second composite material 14 is placed on a surface 15B of the protruding member layer 15, which is on an opposite side to a surface 15A on the first composite material 12 side. In other words, a surface 14A of the second composite material 14 is brought into contact with the surface 15B of the protruding member layer 15. As a result, the first composite material 12 and the second composite material 14 are laminated with each other, with the protruding member layer 15 (the protruding members 16) interposed therebetween. Then, by pressing a back surface 14B of the second composite material 14 using a head portion 62, the first composite material 12, the protruding member layer 15, and the second composite material 14 are pressed in the direction Z. Note that the surface 14A is a surface on the other side of the second composite material 14 along the direction Z and the back surface 14B is a surface on one side of the second composite material 14 along the direction Z.

In a state in which the second composite material 14 has been placed, the first composite material 12 and the second composite material 14 are in a cured state. Therefore, the protruding members 16 are positioned between the first composite material 12 and the second composite 14, and have not entered the interior of the first composite material 12 and the interior of the second composite 14. Thus, after placing the second composite material 14, the protruding members 16 are introduced into the first composite material 12 and the second composite material 14, whereby the first composite material 12 and the second composite material 14 are brought into contact with each other (step S24; an introduction step). More specifically, the resin 24 of the first composite material 12 and the resin 24 of the second composite material 14 are heated to a temperature higher than or equal to the melting point of the resin 24, whereby the resin 24 is caused to melt. As a result, because the resin 24 flows, the protruding members 16 enter the interior of the first composite material 12 and the interior of the second composite 14 as a result of being pressed by the head portion 62. More specifically, the resin layer 17 of the protruding member layer 15 also melts and mixes with the resin 24 of the first composite material 12 and the second composite material 14. Then, the protruding members 16 enter into the layer of the resin 24 of the first composite material 12 and the second composite material 14 as a result of being pressed by the head portion 62. As a result, the first composite material 12 and the second composite material 14 are brought into contact and fuse with each other. Then, the protruding members 16 are arranged from the interior of the first composite material 12 to the interior of the second composite material 14. Note that, in this case, the temperature of the protruding members 16 may be maintained to be lower than the temperature of the first composite material 12 and the second composite material 14, by heating the first composite material 12 and the second composite material 14 from outside (from the base portion 60 side and the head portion 62 side, for example).

Further, the following is also possible as a heating method other than heating the first composite material 12 and the second composite material 14 from outside. For example, an electromagnetic field heating element may be provided inside the resin layer 17 or inside the first composite material 12 and the second composite material 14. The electromagnetic field heating element is a substance that generates heat when an electromagnetic field is applied. By applying the electromagnetic field to the electromagnetic heating element to generate heat, the first composite material 12 and the second composite material 14 that are in contact with each other can easily be caused to fuse with each other. Further, for example, the first composite material 12, the second composite material 14, the protruding members 16, and the resin layer 17 may have resins having mutually different melting points. In this case, for example, the melting point of the resin of the protruding members 16 is set to be higher than the melting point of the resin of the first composite material 12, the second composite material 14, and the resin layer 17. As a result, members other than the protruding members 16 can be melted, whereby the protruding members 16 can easily be caused to penetrate the first composite material 12 and the second composite material 14. After that, the resin of the protruding members 16 can be melted, and the resin can be integrated with other resins. Note that a resin (for example, PEEK resin) can have various melting points by adjusting components thereof. In addition, when the resins of the first composite material 12, the second composite material 14, and the resin layer 17 are the thermosetting resins, after the protruding members 16 penetrate the first composite material 12 and the second composite material 14 as a result of being pressed, these thermosetting resins are cured by heating. In this way, the thermoplastic resin of the protruding members 16 and the thermosetting resins can be easily mixed together.

After that, by curing the resin 24 of the first composite material 12 and the resin 24 of the second composite 14, the first composite material 12 and the second composite 14 are bonded in a state in which the protruding members 16 are introduced into the interiors thereof (step S26; a bonding step). More specifically, by cooling the resin 24 of the first composite material 12 and the resin 24 of the second composite 14, the first composite material 12 and the second composite 14 are bonded in a state in which the protruding members 16 are introduced therein. In this way, the manufacturing of the composite material 10 illustrated in FIG. 1 is completed.

Note that when the thermosetting resin is used as the resin 24, the resin 24 is in a pre-cured state, so the resin 24 is not heated in step S24. In this case, in step S24, the first composite material 12, the protruding member layer 15, and the second composite material 14 are pressed by the head 62 without heating the resin 24. Due to this pressing, the protruding members 16 enter the interior of the first composite material 12 prior to being cured and the interior of the second composite material 14 prior to being cured. Then, in step S26, the resin 24 of the first composite material 12 and the resin 24 of the second composite material 14 are heated and cured, and the first composite material 12 and the second composite 14 are thus bonded in a state in which the protruding members 16 are introduced therein.

In addition, in the description of FIG. 5, the first composite material 12 and the second composite material 14 are, from an initial state prior to molding, in a state of having the reinforcing fibers 22 impregnated with the resin 24. However, up to step S26 (the bonding step) the first composite material 12 and the second composite 14 need not necessarily include the resin 24, and may include only the reinforcing fibers 22. In this case, for example, in step S22, the first composite material 12 and the second composite material 14 that do not include the resin 24 are laminated, with the protruding member layer 15 interposed therebetween. Then, after that, the uncured resin 24 is caused to flow into the first composite material 12 and the second composite material 14, and the reinforcing fibers 22 of the first composite material 12 and the second composite material 14 are impregnated with the resin 24. This step of impregnating the reinforcing fibers 22 with the resin 24 may be performed before, simultaneously with, or subsequently to step S24. The subsequent step S26 (the bonding step) is implemented in a same way as described in FIG. 5. Further, only one of the first composite material 12 and the second composite material 14 may be in a state of not being impregnated with the resin 24 up to step S26 (the bonding step).

As described above, the composite material 10 according to the present embodiment includes the first composite material 12 (the first composite material layer), the second composite material 14 (the second composite material layer), and the plurality of protruding members 16. The first composite material 12 is the layer of composite material having the reinforcing fibers 22 impregnated with the resin 24. The second composite material 14 is the layer of composite material bonded to the first composite material 12 and having the reinforcing fibers 22 impregnated with the resin 24. Further, the protruding members 16 are provided from the interior of the first composite material 12 to the interior of the second composite material 14. Each of the protruding members 16 is provided with the plurality of protrusions 32 protruding in mutually different directions.

The composite material 10 is formed such that the first composite material 12 and the second composite material 14 are bonded to each other and, in addition, the protruding members 16 are provided from the interior of the first composite material 12 to the interior of the second composite 14. The protruding members 16 physically fasten the first composite material 12 and the second composite 14. Further, each of the protruding members 16 includes the plurality of protrusions 32 extending in mutually different directions. Therefore, the protruding members 16 are less likely to fall out from the first composite material 12 and the second composite material 14. Therefore, the composite material 10 can suppress delamination between the first composite material 12 and the second composite material 14.

In addition, the method for bonding a composite material according to the present embodiment is a method for bonding the first composite material 12 including the reinforcing fibers 22 and the second composite material 14 including the reinforcing fibers 22 by impregnating the first composite material 12 and the second composite material 14 with the resin 24. This bonding method includes the protruding member placement step, the second composite material placement step, the introduction step, and the bonding step. In the protruding member placement step, the plurality of protruding members 16 are placed on the surface 12A of the first composite material 12. Each of the protruding members 16 includes the plurality of protrusions 32 protruding in mutually different directions. Further, in the second composite material placement step, the second composite material 14 is placed at a location at which the protruding members 16 on the surface 12A of the first composite material 12 are placed. Then, in the introduction step, the first composite material 12 and the second composite 14 are brought into contact with each other while the protruding members 16 are introduced into the interior of the first composite material 12 and the interior of the second composite material 14. Then, in the bonding step, the first composite material 12 and the second composite material 14 are bonded together in a state where the protruding members 16 are introduced therein, by curing the resin 24 with which the first composite material 12 and the second composite material 14 are impregnated.

According to this bonding method, the first composite material 12 and the second composite material 14 are bonded together in a state where the protruding members 16 are introduced therein. Accordingly, the first composite material 12 and the second composite material 14 can be bonded while being physically fastened together by the protruding members 16. Furthermore, each of the protruding members 16 includes the plurality of protrusions 32 extending in mutually different directions. Therefore, the protruding members 16 are less likely to fall out from the first composite material 12 and the second composite material 14. As a result, according to this bonding method, delamination between the first composite material 12 and the second composite material 14 can be suppressed.

The resin 24 with which the composite material 12 and the second composite material 14 are impregnated is a thermoplastic resin. Then, in the introduction step, the resin 24, with which the first composite material 12 and the second composite material 14 are impregnated, is heated and melted, whereby the protruding members 16 are introduced into the first composite material 12 and the second composite material 14. Further, in the bonding step, the resin 24, with which the first composite material 12 and the second composite material 14 are impregnated, is cured by cooling. This bonding method allows the resin 24, which is a thermoplastic resin, to be heated and melted, thereby making the resin 24 soft, and allowing the protruding members 16 to be introduced into the layers of the resin 24 of the first composite material 12 and the second composite material 14. Then, after that, by cooling the resin 24, the first composite material 12 and the second composite material 14 are cured and bonded to each other in the state in which the protruding members 16 are introduced therein. According to this bonding method, in the composite material in which the thermoplastic resin is used, delamination between the first composite material 12 and the second composite material 14 can be favorably suppressed.

Further, in the protruding member placement step, the protruding member layer 15 that includes the plurality of protruding members 16 in the resin (the resin layer 17) is formed on the surface 12A of the first composite material 12. With this bonding method, by forming the protruding member layer 15, which includes the protruding members 16, on the surface 12A of the first composite 12, the protruding members 16 can be appropriately formed on the surface 12A of the first composite 12, and the protruding members 16 can be appropriately introduced in the interiors of the first composite material 12 and the second composite material 14.

Additionally, the protruding members 16 are formed of the composite material having the reinforcing fibers 44 impregnated with the resin 42a. According to this bonding method, by using as the protruding members 16 the composite material having the reinforcing fibers 44 impregnated with the resin 42a, delamination between the first composite 12 and the second composite 14 can be favorably suppressed while improving adhesion of the protruding members 16 to the first composite material 12 and the second composite material 14.

Further, the protruding members 16 are formed by crushing the porous intermediate material 16A. The intermediate material 16A is formed by heating and then cooling raw materials, which include the plurality of reinforcing fibers 44 of the predetermined length and the resin 42, under a predetermined pressure. By forming the protruding members 16 in this manner, the protruding members 16 having high adhesion to the first composite material 12 and the second composite material 14 can be easily manufactured.

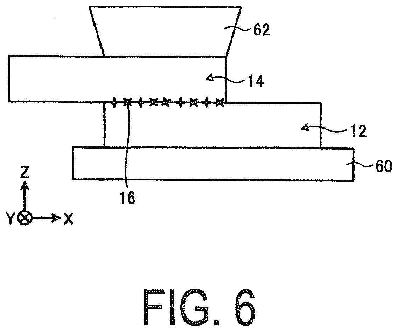

FIG. 6 is a diagram illustrating another example of a bonded state of the first composite material and the second composite material. In the description of FIG. 5, the first composite material 12 and the second composite material 14 are bonded together by the entire surfaces thereof but as illustrated in FIG. 6, part of the surfaces may be bonded together. In this case, the protruding members 16 may be provided only on the part of the surfaces to be bonded. In addition, the protruding members 16 are provided evenly across the entire area of the surfaces to be bonded but the present invention is not limited to this. For example, a larger number of the protruding members 16 may be placed at end portions of the surfaces to be bonded, and a smaller number of the protruding members 16 may be placed at parts other than the end portions of the surfaces to be bonded. In this way, a bonding force at the end portions, where stress increases, can be enhanced, and delamination can be favorably suppressed. Conversely, a larger number of the protruding members 16 may be placed at a center portion of the surfaces to be bonded, and a smaller number of the protruding members 16 may be placed at the end portions of the surfaces to be bonded. While the bonding force tends to be low at the center portion of the bonding surfaces, the bonding force at the center portion can be favorably enhanced by placing a larger number of the protruding members 16 thereat.

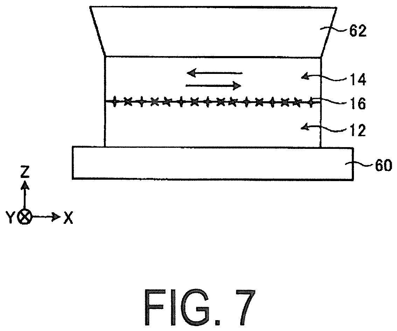

FIG. 7 is a diagram illustrating another example of a bonding method for the first composite material and the second composite material. The introduction step for introducing the protruding members 16 in the interiors of the first composite material 12 and the second composite material 14 may be performed as illustrated in FIG. 7. That is, as illustrated in FIG. 7, the second composite material 14 is caused to move in a reciprocating manner with respect to the first composite material 12, in a direction orthogonal to the lamination direction (the direction Z), that is, in a direction along the surface. This movement causes the protruding members 16 including the plurality of protrusions 32 to be rubbed whereby heat is generated, and the resins 24 of the first composite material 12 and the second composite 14 can be melted quicker. In other words, vibration fusion may be performed in the introduction step.

### Reference Signs List

10 Composite material
12 First composite material
12A, 14A Surface
14 Second composite material
16 Protruding member
22 Reinforcing fiber
24 Resin
32 Protrusion

## Claims

1. A method for bonding a first composite material (12) that contains reinforcing fibers (22) and is capable to be impregnated with a resin and a second composite material (14) that contains reinforcing fibers (22) and that is capable to be impregnated with a resin, the method comprising:
a protruding member placement step (S20) for placing, on a surface (12A) of the first composite material (12), a plurality of protruding members (16) each including a plurality of protrusions (32) protruding in mutually different directions;
a second composite material placement step (S22) for placing the second composite material (14) at a location, where the protruding members (16) are placed, of the surface (12A) of the first composite material (12);
an introduction step (S24) for introducing the protruding members (16) into the interior of the first composite material (12) and the interior of the second composite material (14) to bring the first composite material (12) and the second composite material (14) into contact with each other; and
a bonding step (S26) for curing the resin (24) with which the first composite material (12) and the second composite material (14) are each impregnated in a state where the protruding members (16) are introduced in the interiors to bond the first composite material (12) and the second composite material (14),
wherein the protruding member (16) is formed of a composite material having reinforcing fibers (44) impregnated with a resin (42), and is formed by heating, under a predetermined pressure, a raw material including a plurality of reinforcing fibers (44) of a predetermined length and a resin (42), then cooling the raw material to form a porous intermediate material (16A), and crushing the intermediate material (16A).

2. The method according to claim 1, wherein
the resin (24) with which the first composite material (12) and the second composite material (14) are each impregnated is a thermoplastic resin,
the introduction step (S24) includes heating and melting the resin (24) with which the first composite material (12) and the second composite material (14) are each impregnated to introduce the protruding members (16) into the interiors of the first composite material (12) and the second composite material (14), and
the bonding step (S26) includes cooling the resin (24) with which the first composite material (12) and the second composite material (14) are each impregnated to cure the resin (24).

3. The method according to claim 1, wherein the protruding member placement step (S20) includes forming, on a surface (12A) of the first composite material (12), a protruding member layer (15) in which the protruding members (16) are included in a resin (42).

4. The method according to claim 1, wherein in the introduction step (S24), the second composite material (14) is caused to move in a reciprocating manner with respect to the first composite material (12), in a direction orthogonal to a lamination direction as a direction along the surface.

5. The method according to claim 1, wherein the first composite material (12) and the second composite material (14) do not include the resin (24), and include only the reinforcing fibers (22), up to the bonding step (S26).

## Patentansprüche

1. Ein Verfahren zum Verbinden eines ersten Verbundmaterials (12), das Verstärkungsfasern (22) enthält und mit einem Harz imprägniert werden kann, und eines zweiten Verbundmaterials (14), das Verstärkungsfasern (22) enthält und mit einem Harz imprägniert werden kann, wobei das Verfahren aufweist:
einen Platzierungsschritt (S20) eines vorstehenden Elements zum Platzieren einer Vielzahl von vorstehenden Elementen (16) auf einer Oberfläche (12A) des ersten Verbundmaterials (12) , die jeweils eine Vielzahl von Vorsprüngen (32) umfassen, die in zueinander unterschiedliche Richtungen vorstehen;
einen Platzierungsschritt (S22) eines zweiten Verbundmaterials zum Platzieren des zweiten Verbundmaterials (14) an einer Stelle der Oberfläche (12A) des ersten Verbundmaterials (12), an der die vorstehenden Elemente (16) platziert sind;
einen Einführungsschritt (S24) zum Einführen der vorstehenden Elemente (16) in den Innenraum des ersten Verbundmaterials (12) und den Innenraum des zweiten Verbundmaterials (14), um das erste Verbundmaterial (12) und das zweite Verbundmaterial (14) miteinander in Kontakt zu bringen; und
einen Verbindungsschritt (S26) zum Aushärten des Harzes (24), mit dem das erste Verbundmaterial (12) und das zweite Verbundmaterial (14) jeweils in einem Zustand imprägniert sind, in dem die vorstehenden Elemente (16) in die Innenräume eingeführt werden, um das erste Verbundmaterial (12) und das zweite Verbundmaterial (14) zu verbinden,
wobei das vorstehende Element (16) aus einem Verbundmaterial mit Verstärkungsfasern (44) ausgebildet ist, die mit einem Harz (42) imprägniert sind, und durch Erhitzen eines Rohmaterials, das eine Vielzahl von Verstärkungsfasern (44) mit einer vorbestimmten Länge und ein Harz (42) enthält, unter einem vorbestimmten Druck, anschließendes Abkühlen des Rohmaterials zur Bildung eines porösen Zwischenmaterials (16A) und Zerkleinern des Zwischenmaterials (16A) ausgebildet wird.

2. Das Verfahren nach Anspruch 1, wobei
das Harz (24), mit dem das erste Verbundmaterial (12) und das zweite Verbundmaterial (14) jeweils imprägniert werden, ein thermoplastisches Harz ist,
der Einführungsschritt (S24) ein Erhitzen und ein Schmelzen des Harzes (24), mit dem das erste Verbundmaterial (12) und das zweite Verbundmaterial (14) jeweils imprägniert sind, umfasst, um die vorstehenden Elemente (16) in die Innenräume des ersten Verbundmaterials (12) und des zweiten Verbundmaterials (14) einzuführen, und
der Verbindungsschritt (S26) ein Abkühlen des Harzes (24) umfasst, mit dem das erste Verbundmaterial (12) und das zweite Verbundmaterial (14) jeweils imprägniert sind, um das Harz (24) auszuhärten.

3. Das Verfahren nach Anspruch 1, wobei der Platzierungsschritt (S20) eines vorstehenden Elements ein Ausbilden einer Schicht (15) eines vorstehenden Elements auf einer Oberfläche (12A) des ersten Verbundmaterials (12) umfasst, in der die vorstehenden Elemente (16) in einem Harz (42) enthalten sind.

4. Das Verfahren nach Anspruch 1, wobei in dem Einführungsschritt (S24) das zweite Verbundmaterial (14) veranlasst wird, sich in Bezug auf das erste Verbundmaterial (12) in einer Richtung orthogonal zu einer Laminierungsrichtung als eine Richtung entlang der Oberfläche hin und her zu bewegen.

5. Das Verfahren nach Anspruch 1, wobei das erste Verbundmaterial (12) und das zweite Verbundmaterial (14) das Harz (24) nicht enthalten und nur die Verstärkungsfasern (22) bis zum Verbindungsschritt (S26) enthalten.

## Revendications

1. Procédé pour le collage d'un premier matériau composite (12) qui contient des fibres de renfort (22) et est capable d'être imprégné d'une résine et d'un deuxième matériau composite (14) qui contient des fibres de renfort (22) et qui est capable d'être imprégné d'une résine, le procédé comprenant :
une étape de placement d'éléments en saillie (S20) pour placer, sur une surface (12A) du premier matériau composite (12), une pluralité d'éléments en saillie (16) comportant chacun une pluralité de saillies (32) faisant saillie dans des directions mutuellement différentes ;
une étape de placement de deuxième matériau composite (S22) pour placer le deuxième matériau composite (14) à un emplacement, où les éléments en saillie (16) sont placés, de la surface (12A) du premier matériau composite (12) ;
une étape d'introduction (S24) pour introduire les éléments en saillie (16) dans l'intérieur du premier matériau composite (12) et l'intérieur du deuxième matériau composite (14) pour mettre le premier matériau composite (12) et le deuxième matériau composite (14) en contact avec l'autre ; et
une étape de collage (S26) pour faire durcir la résine (24) dont le premier matériau composite (12) et le deuxième matériau composite (14) sont chacun imprégnés dans un état où les éléments en saillie (16) sont introduits dans les intérieurs pour coller le premier matériau composite (12) et le deuxième matériau composite (14),
dans lequel l'élément en saillie (16) est constitué d'un matériau composite ayant des fibres de renfort (44) imprégnées d'une résine (42), et est formé par chauffage, sous une pression prédéterminée, d'un matériau brut comportant une pluralité de fibres de renfort (44) d'une longueur prédéterminée et une résine (42), puis refroidissement du matériau brut pour former un matériau intermédiaire (16A) poreux, et écrasement du matériau intermédiaire (16A).

2. Procédé selon la revendication 1, dans lequel
la résine (24) dont le premier matériau composite (12) et le deuxième matériau composite (14) sont chacun imprégnés est une résine thermoplastique,
l'étape d'introduction (S24) comporte le chauffage et la fusion de la résine (24) dont le premier matériau composite (12) et le deuxième matériau composite (14) sont chacun imprégnés pour introduire les éléments en saillie (16) dans les intérieurs du premier matériau composite (12) et du deuxième matériau composite (14), et
l'étape de collage (S26) comporte le refroidissement de la résine (24) dont le premier matériau composite (12) et le deuxième matériau composite (14) sont chacun imprégnés pour faire durcir la résine (24).

3. Procédé selon la revendication 1, dans lequel l'étape de placement d'éléments en saillie (S20) comporte la formation, sur une surface (12A) du premier matériau composite (12), d'une couche d'éléments en saillie (15) dans laquelle les éléments en saillie (16) sont compris dans une résine (42).

4. Procédé selon la revendication 1, dans lequel dans l'étape d'introduction (S24), le deuxième matériau composite (14) est amené à se déplacer d'une manière alternative par rapport au premier matériau composite (12), dans une direction orthogonale à une direction de stratification comme une direction le long de la surface.

5. Procédé selon la revendication 1, dans lequel le premier matériau composite (12) et le deuxième matériau composite (14) ne comportent pas la résine (24), et comportent uniquement les fibres de renfort (22), jusqu'à l'étape de collage (S26).
